# EUROPÄISCHE PATENTSCHRIFT

(11) **EP 3 616 947 B1**
(45) Veröffentlichungstag und Bekanntmachung des Hinweises auf die Patenterteilung: **10.07.2024**
(21) Anmeldenummer: 19189384.1
(22) Anmeldetag: 31.07.2019
(51) Int. Cl.: B60G 11/27, B60G 11/30, B60G 17/015, B60G 17/017, B60G 17/018, B60G 17/052

(54) **DRUCKLUFTVORRICHTUNG FÜR EINE LUFTFEDERUNG EINES KRAFTFAHRZEUGS, KRAFTFAHRZEUG UND VERFAHREN ZUM BETRIEB EINER DRUCKLUFTVORRICHTUNG**
COMPRESSED AIR DEVICE FOR AIR SUSPENSION OF A MOTOR VEHICLE, MOTOR VEHICLE AND METHOD FOR OPERATING A COMPRESSED AIR DEVICE
DISPOSITIF D'AIR COMPRIMÉ POUR UNE SUSPENSION PNEUMATIQUE D'UN VÉHICULE AUTOMOBILE, VÉHICULE AUTOMOBILE ET PROCÉDÉ DE FONCTIONNEMENT D'UN DISPOSITIF D'AIR COMPRIMÉ

(30) Priorität: 03.08.2018 DE 102018118939
(43) Veröffentlichungstag der Anmeldung: 04.03.2020
(73) Patentinhaber: MAN Truck & Bus SE, 80995 München (DE)
(72) Erfinder: Gerritzen, Ralph, 82110 Germering (DE); Meyer-Tuve, Harald, 85247 Schwabhausen (DE)
(74) Vertreter: v. Bezold & Partner Patentanwälte - PartG mbB

(56) Entgegenhaltungen:
- DE-A1- 10 223 257
- DE-A1- 10 357 762
- DE-A1- 19 515 895

## Beschreibung

Die Erfindung betrifft eine Druckluftvorrichtung für eine Luftfederung eines Kraftfahrzeugs. Ferner betrifft die Erfindung ein Kraftfahrzeug mit einer entsprechenden Druckluftvorrichtung sowie ein Verfahren zum Betrieb einer Druckluftvorrichtung für eine Luftfederung eines Kraftfahrzeugs.

Um bei Kraftfahrzeugen, speziell bei Omnibussen, den Fahrgästen den Einstieg zu erleichtern, ist im Stand der Technik bekannt Kraftfahrzeuge mit Luftfederbälgen auszustatten und diese für den Einstiegsvorgang, vorzugsweise auf der Einstiegsseite, abzusenken. Bei diesem, oftmals als "*Kneeling*" bezeichneten, Verfahren werden die Luftfederbälge üblicherweise solange entlüftet bzw. entleert bis das Fahrzeugniveau ein eingestelltes Minimum erreicht, das knapp über dem mechanischen Anschlag liegt, um dadurch beispielsweise Rollstuhlbenutzen, Eltern mit Kinderwagen und/oder älteren Menschen einen möglichst ebenen Einstieg vom Bordstein der Haltestelle in das Fahrzeug zu ermöglichen. Zur Weiterfahrt werden die Luftfederbälge dann durch Befüllen mit Druckluft wieder auf Normalniveau angehoben, um so ein wirkungsvolles Federungsverhaltens der Luftfederbälge während der Fahrt zu erreichen.

Bei diesen, gerade im Fall von Stadtbussen, häufig während des alltäglichen Betriebs auftretenden Befüllungs- und Entleerungsvorgängen, wird die Druckluft beim Entleeren der Luftfederbälge üblicherweise ungenutzt an die Atmosphäre abgegeben und steht damit für ein anschließendes Befüllen der Luftfederbälge nicht mehr zur Verfügung.

Aus der DE 102 23 257 A1 ist in diesem Zusammenhang bekannt, die Abluft von Luftfedern zur Befüllung von Fahrzeugreifen zu nutzen. Dazu wird eine automatische Reifendruckregelung und Luftfederung für Fahrzeuge offenbart, bestehend aus Reifen, Luftfedern, Ventilen, Druckleitungen, Druckspeichern, Drucksensor und Druckerzeuger, wobei ein Reifendruckregelungssystem mit einem Luftfedersystem kombiniert ist. Ferner sind dabei drei Umschalter mit einem Drucksensor, einem Luftspeicher und einem Druckerzeuger in der Weise verbunden, dass beide oder jeweils eines der beiden Systeme mit dem Druckerzeuger und/oder mit dem Druckspeicher oder beide Systeme untereinander über Druckleitungen in Verbindung stehen, so dass druckerzeugende, speichernde, pressende und regelnde Komponenten für beide Regelungen nur einmal vorhanden sein müssen und der vorhandene Betriebsdruck durch beide Systeme nutzbar ist. Nachteilig an der vorgenannten Lösung ist allerdings, dass dabei ggf. nur eine geringe Menge Druckluft gespeichert werden kann.

Die DE 103 57 762 A1, die als nächstliegender Stand der Technik betrachtet wird, offenbart ferner eine elektronische Luftaufbereitungsanlage für mit einer elektronisch gesteuerten Luftfederungsanlage (ECAS) ausgerüstete Fahrzeuge. Die Luftaufbereitungsanlage weist einen, einen Kompressor aufweisenden, Druckluftversorgungsteil und einen Verbraucherkreis mit mehreren Druckluftverbraucherkreisen auf, die einen Luftfederungskreis und Druckluftbehälter aufweisende Betriebsbremskreise umfassen. Die Druckluftverbraucherkreise werden über Magnetventile mit Druckluft versorgt. Der Druck in den Druckluftverbraucherkreisen wird durch Drucksensoren überwacht, deren elektrische Drucksignale von einer elektronischen Steuereinheit ausgewertet werden, die die Magnetventile steuert. Das Magnetventil des Luftfederungskreises, der ohne Druckluftbehälter ausgebildet ist, ist im stromlosen Grundzustand geschlossen, während die Magnetventile der weiteren Druckluftverbraucherkreise, insbesondere der Betriebsbremskreise, im stromlosen Grundzustand offen sind. Bei Druckluftbedarf des Luftfederungskreises wird dessen Magnetventil durch die elektronische Steuereinheit in die Offenstellung geschaltet zur Herstellung einer Verbindung mit den Betriebsbremskreisen bzw. mit deren Druckluftbehältern, um den Luftfederungskreis aus den Betriebsbremskreisen zu befüllen.

Entsprechend ist es daher Aufgabe der Erfindung eine Druckluftvorrichtung für eine Luftfederung eines Kraftfahrzeugs sowie ein Verfahren bereitzustellen, mit dem die Nachteile der bisherigen Lösungen vermieden werden. Insbesondere ist es dabei eine Aufgabe der Erfindung eine ressourcensparende Druckluftvorrichtung bereitzustellen bzw. eine kraftstoff- und/oder energieeffiziente Bereitstellung von Druckluft zu ermöglichen.

Diese Aufgaben werden erfindungsgemäß durch eine Druckluftvorrichtung, ein Kraftfahrzeug sowie ein Verfahren mit den Merkmalen der unabhängigen Ansprüche gelöst. Vorteilhafte Ausführungsformen und Anwendungen der Erfindung sind Gegenstand der unabhängigen Ansprüche und werden in der folgenden Beschreibung unter teilweiser Bezugnahme auf die Figuren näher erläutert.

Erfinderseitig wurde in diesem Zusammenhang festgestellt, dass sich ein Einsparpotenzial für Druckluft ergibt, falls die Druckluft beim Entlüften der Luftfederbälge aufgesammelt und einer weiteren Verwendung im Kraftfahrzeug zugeführt wird. Dadurch kann auf vorteilhafte Weise ansonsten zur Drucklufterzeugung benötigter Kraftstoff bzw. Energie eingespart werden.

Die erfindungsgemäße Druckluftvorrichtung für eine Luftfederung eines Kraftfahrzeugs, vorzugsweise für eine Luftfederung eines Omnibusses, umfasst hierzu - in an sich bekannter Weise - eine Drucklufterzeugungseinrichtung, beispielsweise einen Kolbenkompressor und/oder einen Verdichteter, und einen Vorratsbehälter zu Lagerung von Druckluft, der zur Abgrenzung von einem später noch eingehender beschriebenen weiteren Vorratsbehälter im Folgenden als erster Vorratsbehälter bezeichnet wird. Der erste Vorratsbehälter kann in diesem Zusammenhang beispielsweise zur Lagerung bzw. Speicherung der von der Drucklufterzeugungseinrichtung erzeugten Druckluft verwendet werden, wodurch die Drucklufterzeugungseinrichtung selbst nicht für Verbrauchsspitzen ausgelegt sein muss.

Ferner umfasst die Druckluftvorrichtung - ebenfalls in an sich bekannter Weise - mindestens einen Luftfederbalg, beispielsweise einen Rollbalg, der mit Druckluft aus dem ersten Vorratsbehälter und/oder direkt aus der Drucklufterzeugungseinrichtung versorgt wird und vorzugsweise zur Niveauänderung des Kraftfahrzeugs verwendet werden kann. Beispielsweise kann durch Befüllen des mindestens einen Luftfederbalgs das Fahrzeugniveau angehoben und/oder durch ein Entleeren des mindestens einen Luftfederbalgs das Fahrzeug abgesenkt werden. Daneben umfasst die Druckluftvorrichtung noch einen weiteren Vorratsbehälter zur Lagerung von Druckluft, der im Folgenden als zweiter Vorratsbehälter bezeichnet wird. Dieser kann dabei im Wesentlichen analog zum ersten Vorratsbehälter ausgebildet sein und/oder ein größeres oder kleineres Füllvolumen als der erste Vorratsbehälter besitzen. Ferner kann die Druckluftvorrichtung noch weitere für derartige Druckluftsysteme übliche Komponenten, darunter Druckluftleitungen, Ventile, insbesondere Rückschlagventile, und/oder Lufttrockner, umfassen.

Um auf vorteilhafte Weise eine Wiederverwendung der Druckluft zu ermöglichen, ist die Druckluftvorrichtung erfindungsgemäß ausgebildet, die bei einer Entleerung des mindestens einen Luftfederbalgs anfallende Abluft zumindest zu einem Teil dem zweiten Vorratsbehälter zu dessen Befüllung zuzuleiten. Mit anderen Worten entweicht die bei der Entleerung des mindestens einen Luftfederbalgs anfallende Abluft damit nicht ungenutzt in die Atmosphäre, sondern kann für eine weitere Verwendung im Kraftfahrzeug genutzt werden. Auf vorteilhafte Weise kann somit Kraftstoff bzw. Energie, die ansonsten zur Erzeugung der Druckluft, beispielsweise mittels eines Kompressors, aufgewendet werden müsste, eingespart werden.

Gemäß einem ersten Aspekt der Erfindung kann es sich bei dem zweiten Vorratsbehälter um ein Reserverad des Kraftfahrzeugs handeln. Hierzu kann das Reserverad - das vorzugsweise im normalen Fahrbetrieb nicht mit der Straße in Kontakt steht - über entsprechende Druckluftleitungen und/oder Ventile mit den restlichen Komponenten der Druckluftvorrichtung, insbesondere dem mindestens einen Luftfederbalg, verbunden sein. Insgesamt erfüllt das Reserverad damit eine Doppelfunktion: Einerseits kann es im Pannenfall als Ersatz für ein defektes Rad verwendet werden, andererseits kann es als zweiter Vorratsbehälter der Druckluftvorrichtung dienen, wodurch wiederum auf vorteilhafte Weise Ressourcen und Gewicht eingespart werden können, da auf einen zusätzlich zum Reserverad vorhandenen Vorratsbehälter verzichtet werden kann.

Erfindungsgemäß ist die Druckluftvorrichtung ausgebildet, Druckluft aus dem zweiten Vorratsbehälter - die vorzugsweise vormals zur Befüllung des Luftfederbalgs verwendet wurde - mindestens einem druckluftbetätigten Verbraucher zuzuleiten, beispielsweise einer pneumatischen Kolben-Zylinder-Einrichtung und/oder einem Pneumatiksteller. In diesem Zusammenhang kann somit auch von einer "*Wiederverwendung* bzw. von einem "*Recycling*" der Druckluft durch den mindestens einem druckluftbetätigten Verbraucher gesprochen werden. Vorzugsweise benötigt der mindestens eine druckluftbetätigte Verbraucher, der auch als pneumatischer Verbraucher bezeichnet werden kann, dabei zur ordnungsgemäßen Funktion Druckluft auf einem niedrigeren oder gleichen Druckniveau wie der Luftfederbalg in Normallage. Auf vorteilhafte Weise kann durch den Betrieb der ein oder mehreren druckluftbetätigten Verbraucher mittels "*wiederverwendeter*" Druckluft somit Kraftstoff bzw. Energie eingespart werden, die ansonsten zur Erzeugung der Druckluft für diese druckluftbetätigte Verbraucher aufgewendet werden müsste.

Gemäß einer Weiterbildung dieses Aspekts kann der mindestens eine druckluftbetätigte Verbraucher eine Antriebseinrichtung, vorzugsweise eine pneumatische Kolben-Zylinder-Einrichtung, zum Öffnen und/oder Schließen einer Tür des Kraftfahrzeugs, vorzugsweise einer Tür eines Omnibusses, sein oder umfassen. Mit anderen Worten kann es sich somit bei dem mindestens einen druckluftbetätigten Verbraucher um eine Antriebseinrichtung handeln, die mit Druckluft als Medium eine Bewegung ausführt, mittels der eine Fahrzeugtür geöffnet und/oder geschlossen wird. Da gerade bei einem Einsatz der Druckluftvorrichtung im Betrieb eines Omnibusses der "Kneeling"-Vorgang, d. h. das Ablassen von Druckluft aus den Luftfederbalg, oftmals mit einem Öffnen und/oder Schließen der Omnibustür verbunden ist, ergibt sich hier auf besonders vorteilhafte Weise aufgrund dieses Synergieeffekts ein hohes Einsparpotenzial an Energie und/oder Kraftstoff.

Nach einer weiteren Weiterbildung kann die Antriebseinrichtung dabei reversibel, und vorzugsweise stufenlos, in eine erste und eine zweite Stellung bewegbar sein, wobei ein Wechsel zwischen der ersten und zweiten Stellung jeweils durch zuleiten von Druckluft in die Antriebseinrichtung erfolgt. Beispielsweise kann die Antriebseinrichtung hierzu einen doppeltwirkenden Zylinder mit einer 5/2-Wegeventil-Ansteuerung umfassen. Ferner kann die erste Stellung der Antriebeinrichtung einem geöffneten Zustand der Fahrzeugtür und die zweite Stellung der Antriebeinrichtung einer geschlossenen Fahrzeugtür entsprechen. Der Vorteil dieser Weiterbildung liegt darin, dass hierdurch von der Antriebseinrichtung eine konstante Kraft aufgebracht werden kann und Hübe über große Distanzen realisiert werden können.

Gemäß einem weiteren Aspekt der Erfindung kann der mindestens eine druckluftbetätigte Verbraucher eine Haltestellenbremse, eine Betriebsbremse, ein Reifen und/oder ein Druckluftverbraucher eines Fahrzeugsitzes, vorzugsweise eine Sitzfederung, Lordosenstütze, Massageeinrichtung und/oder eine Schweißkühlung, sein oder umfassen. Zudem oder alternativ kann der druckluftbetätigte Verbraucher allerdings auch ein Druckluftreiniger zur Innenraumausblasung, eine Einrichtung zur Druckluftreinigung optischer Sensoren, ein Getriebe mit Schaltunterstützung, ein Drehgelenk mit einstellbarer Dämpfung und/oder ein Pneumatiksteller sein oder umfassen. Trotz der Vielzahl an genannten Beispielen für druckluftbetätigten Verbraucher ist diese Aufzählung dabei nicht als abgeschlossen zu verstehen. Zudem oder alternativ kann die Druckluftvorrichtung auch noch weitere - nicht explizit genannte - druckluftbetätigte Verbraucher umfassen, d. h. Verbraucher, die mit Druckluft als Medium eine Bewegung ausführen und/oder mit Druckluft als Medium einen Luftstrom erzeugen. Durch den Betrieb derartiger Verbrauchers durch wiederverwendete Druckluft kann dabei auf vorteilhafte Weise Kraftstoff bzw. Energie eingespart werden, die ansonsten zur Erzeugung der Druckluft diese Verbraucher, beispielsweise mittels eines Kolbenkompressors, aufgewendet werden müsste.

Nach einem weiteren Aspekt der Erfindung kann die Druckluftvorrichtung ausgebildet sein, Druckluft aus dem ersten Vorratsbehälter dem mindestens einen druckluftbetätigten Verbraucher und/oder dem zweiten Vorratsbehälter zuzuleiten. Hierzu können entsprechende Druckluftleitungen und/oder Ventile zwischen dem ersten Vorratsbehälter und dem mindestens einen druckluftbetätigten Verbraucher und/oder zwischen dem ersten Vorratsbehälter und dem zweiten Vorratsbehälter vorgesehen sein. Vorzugsweise findet das Zuleiten von Druckluft vor allem dann statt, falls eine Druckluftmenge oder ein Innendruck im zweiten Vorratsbehälter einen ersten Schwellenwert unterschreitet. Der erste Schwellenwert kann dabei sowohl ein Druckluftmenge-Schwellenwert, beispielsweise 50 l, oder einen Innendruck-Schwellenwert, beispielsweise 5 bar, bezeichnen. Vorzugsweise ist der erste Schwellenwert dabei so festgelegt, dass oberhalb dieses ersten Schwellenwerts eine ordnungsgemäße Funktion des mindestens einen Verbrauchers der Druckluftvorrichtung gewährleistet ist. Auf vorteilhafte Weise kann so erreicht werden, dass, falls die recycelte Druckluftmenge oder der Innendruck im zweiten Vorratsbehälter für die Versorgung des mindestens einen druckluftbetätigten Verbrauchers nicht ausreicht, zusätzlich Druckluft aus dem ersten Vorratsbehälter zur Verfügung gestellt wird und damit ein sicherer Betrieb des mindestens einen Verbrauchers gewährleistet bleibt. Zudem oder alternativ kann die Druckluftvorrichtung auch ausgebildet sein, Druckluft direkt von der Drucklufterzeugungseinrichtung dem mindestens einen druckluftbetätigten Verbraucher und/oder dem zweiten Vorratsbehälter zuzuleiten.

Erfindungsgemäß umfasst die Druckvorrichtung eine elektro-pneumatische Steuereinrichtung, die über pneumatische Förderleitungen in Verbindung mit dem ersten und zweiten Vorratsbehälter, dem mindestens einen Luftfederbalg sowie dem mindestens einen druckluftbetätigten Verbraucher stehen kann und ausgebildet sein kann, mittels elektrisch ansteuerbarer pneumatischer Ventile eine Verteilung von Druckluft zwischen diesen Komponenten vorzunehmen. Auf vorteilhafte Weise wird dadurch eine schnelle und zentrale Druckluftverteilung in der Druckvorrichtung gewährleistet. Zudem oder alternativ kann die Steuereinrichtung auch pneumatisch ansteuerbare und/oder manuell betätigbare pneumatische Ventile umfassen.

Nach einer Weiterbildung dieses Aspekts kann die elektro-pneumatische Steuereinrichtung ausgebildet sein, eine Verteilung von Druckluft zwischen den angeschlossenen Komponenten auf Basis von über eine Schnittstelle empfangener Fahrzeug- und/oder Sensordaten und/oder Steuersignale vorzunehmen. Beispielsweise kann die elektro-pneumatische Steuereinrichtung hierzu Fahrzeugdaten empfangen, die angeben, dass die Haltestellenbremse betätigt wurde, woraufhin die Steuereinrichtung ein Entleeren der Druckluft aus mindestens einem Luftfederbalg in den zweiten Vorratsbehälter vornimmt. Ferner kann die elektro-pneumatische Steuereinrichtung auch Sensordaten empfangen, die einen Innendruck und/oder eine Druckluftmenge im ersten und/oder zweiten Vorbehälter betreffen. Die Verteilung von Druckluft zwischen den angeschlossenen Komponenten auf Basis von Steuersignalen, Fahrzeugdaten und/oder Sensordaten vorzunehmen, ermöglicht hierbei auf vorteilhafte Weise eine effiziente und bedarfsgerechte Nutzung der im System vorhanden Druckluft.

Gemäß einer Weiterbildung dieses Aspekts kann die elektro-pneumatische Steuereinrichtung ein Pneumatikmodul, dem die elektrisch ansteuerbaren pneumatischen Ventile zur Verteilung der Druckluft zugeordnet sind, und ein Elektronikmodul zur Ansteuerung besagter Ventile umfassen, wobei das Pneumatikmodul und das Elektronikmodul als separate Bauteile ausgeführt sind oder von einem gemeinsamen Gehäuse umhaust werden. Durch die modulare Bauweise kann auf vorteilhafte Weise im Defektfall ein schneller Austausch der betreffenden Teile ermöglicht werden, was dadurch insgesamt die Ausfallsicherheit der Druckluftvorrichtung erhöht.

Zudem oder alternativ kann die elektro-pneumatische Steuereinrichtung ausgebildet sein, in Abhängigkeit von einer Druckluftmenge und/oder von einem Innendruck und einem Fassungsvermögen des ersten und zweiten Vorratsbehälters Druckluft wahlweise aus dem ersten und/oder zweiten Vorratsbehälter dem mindestens einem druckluftbetätigten Verbraucher zuzuleiten. Beispielsweise kann die elektro-pneumatische Steuereinrichtung hierzu ausgebildet sein, falls im zweiten Vorratsbehälters ein bestimmtes Innendruckniveau unterschritten wird - da beispielsweise zuvor wenig Druckluft "*recycelt*" wurde - dem mindestens einem druckluftbetätigten Verbraucher Druckluft aus dem ersten Vorratsbehälter zuzuleiten. Falls dann - nach mehreren Entleerungsvorgängen der Luftfederbälge - im zweiten Vorratsbehälters erneut ein ausreichender Innendruck zur ordnungsgemäßen Versorgung des mindestens einen druckluftbetätigten Verbrauchers zur Verfügung steht, kann die elektro-pneumatische Steuereinrichtung ausgebildet sein, Druckluft dann aus dem zweiten Vorratsbehälter dem mindestens einem druckluftbetätigten Verbraucher zuzuleiten. Dadurch kann auf vorteilhafte Weise eine effiziente und bedarfsgerechte Nutzung der im System vorhanden Druckluft erreicht werden.

Nach einem weiteren Aspekt der Erfindung kann die elektro-pneumatische Steuereinrichtung ausgebildet sein, in Abhängigkeit von einem prognostizierten und/oder aktuellen Druckluftbedarf des mindestens einen druckluftbetätigten Verbrauchers Druckluft wahlweise aus dem ersten und/oder zweiten Vorratsbehälter dem mindestens einem druckluftbetätigten Verbraucher zuzuleiten. Dabei kann der prognostizierte Druckluftbedarf auf Basis mathematischer Modelle, Fahrzeugdaten, Sensordaten und/oder einem durchschnittlichen Druckluftbedarf des mindestens einen druckluftbetätigten Verbrauchers vorausschauend berechnet werden. Beispielsweise kann hierzu aus dem Unterschreiten einer gewissen Grenzgeschwindigkeit ein baldiger Druckluftbedarf zum Betätigen der Haltestellenbremse abgeleitet werden, der dann mit der momentan in den jeweiligen Vorratsbehältern vorhandenen Druckluftmenge verglichen wird.

Ferner kann die Ermittlung des aktuellen Druckluftbedarfs ebenfalls auf Basis von Fahrzeugdaten und/oder Sensordaten erfolgen. Insgesamt ermöglicht dieser Aspekt auf vorteilhafte Weise wiederum eine effiziente und bedarfsgerechte Nutzung der im System vorhanden Druckluft.

Gemäß einem weiteren Aspekt der Erfindung kann die Druckluftvorrichtung - zusätzlich zu dem mindestens einen Luftfederbalg - mindestens zwei druckluftbetätigten Verbraucher, beispielsweise einen ersten und einen zweiten druckluftbetätigten Verbraucher, sowie einen dritten Vorratsbehälter zur Lagerung von Druckluft umfassen. Dabei kann die Druckluftvorrichtung ausgebildet sein, zumindest einen Teil der Abluft von einem der druckluftbetätigten Verbraucher, beispielsweise dem ersten druckluftbetätigten Verbraucher, zunächst dem dritten Vorratsbehälter und von dort einen weiteren, beispielsweise dem zweiten, druckluftbetätigten Verbraucher zuzuleiten. Mit anderen Worten kann somit ein "*mehrstufiges Recyceln*" der Druckluft erfolgen, bei dem die Abluft des mindestens einen Luftfederbalgs zum Betrieb des ersten druckluftbetätigten Verbrauchers, beispielsweise eine Haltestellenbremse, und die Abluft des ersten druckluftbetätigten Verbrauchers zum Betrieb des zweiten druckluftbetätigten Verbrauchers, beispielsweise ein Pneumatiksteller, verwendet wird. Vorzugsweise benötigt dabei der erste druckluftbetätigte Verbraucher zur ordnungsgemäßen Funktion Druckluft auf einem niedrigeren oder gleichen Druckniveau wie der Luftfederbalg in Normallage und der zweite druckluftbetätigte Verbraucher zur ordnungsgemäßen Funktion Druckluft auf einem niedrigeren oder gleichen Druckniveau wie der erste druckluftbetätigte Verbraucher. Durch die mehrstufige Verwendung der Druckluft kann auf vorteilhafte Weise die Druckluftvorrichtung die vormals erzeugte Druckluft noch effizienter genutzt werden, wodurch Kosten und Ressourcen eingespart werden können.

Ferner wird erfindungsgemäß auch ein Kraftfahrzeug, vorzugsweise ein Nutzfahrzeug und besonders bevorzugst ein Omnibus, bereitgestellt, umfassend eine Druckluftvorrichtung für eine Luftfederung wie in diesem Dokument beschrieben.

Des Weiteren wird erfindungsgemäß ein Verfahren zum Betrieb einer Druckluftvorrichtung für eine Luftfederung eines Kraftfahrzeugs bereitgestellt. Vorzugsweise handelt es sich dabei um ein Verfahren zum Betrieb einer Druckluftvorrichtung für eine Luftfederung eines Omnibusses. Die Druckluftvorrichtung umfasst dabei - in an sich bekannter Weise - eine Drucklufterzeugungseinrichtung, vorzugsweise einen Kompressor und/oder einen Verdichter, einen ersten Vorratsbehälter zur Lagerung von Druckluft, mindestens einen Luftfederbalg, vorzugsweise zur Niveauänderung des Kraftfahrzeugs, und einen zweiten Vorratsbehälter zur Lagerung von Druckluft. Erfindungsgemäß umfasst das Verfahren die Schritte: Befüllen des mindestens einen Luftfederbalgs mit Druckluft aus dem ersten Vorratsbehälter und/oder der Drucklufterzeugungseinrichtung und Entleeren des mindestens einen Luftfederbalgs, durch Ausleiten zumindest eines Teils der Druckluft aus dem mindestens einen Luftfederbalg in den zweiten Vorratsbehälter. Falls das Fahrzeug hierbei mehrere Luftfederbälge umfasst, können beim "*Befüllen*" alle im Fahrzeug vorhanden Luftfederbälge, aber auch nur einzelne der Luftfederbälge mit Druckluft befüllt werden. Entsprechend kann der Ausdruck "*Entleeren*" sowohl ein vollständiges, aber auch nur ein teilentleeren der ein oder mehreren Luftfederbälge bezeichnen. Auf vorteilhafte Weise wird dadurch die bei der Entleerung des mindestens einen Luftfederbalgs anfallende Abluft gesammelt und kann für eine weitere Verwendung im Kraftfahrzeug genutzt werden.

Erfindungsgemäß umfasst die Druckluftvorrichtung mindestens einen druckluftbetätigten Verbraucher, beispielsweise einen Pneumatiksteller, und das Verfahren den zusätzlichen Schritt des Versorgens des mindestens einen druckluftbetätigten Verbrauchers mit Druckluft aus dem zweiten Vorratsbehälter. Auf vorteilhafte Weise kann somit Kraftstoff bzw. Energie, die ansonsten zur Erzeugung der Druckluft für den druckluftbetätigten Verbraucher aufgewendet werden müsste, eingespart werden. Dabei kann die im Rahmen des Verfahrens verwendete Druckluftvorrichtung ferner auch alle Merkmale der Druckluftvorrichtung aufweisen, die in diesem Dokument bereits für die Druckluftvorrichtung beschrieben wurden. D. h., die vorrichtungsgemäß offenbarten Merkmale der Druckluftvorrichtung sollen somit auch im Zusammenhang mit dem Verfahren offenbart und beanspruchbar sein.

Die zuvor beschrieben Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine Druckluftvorrichtung für eine Luftfederung eines Kraftfahrzeugs gemäß einer Ausführungsform der Erfindung;
- Figur 2:: Eine Druckluftvorrichtung für eine Luftfederung eines Kraftfahrzeugs gemäß einer zweiten Ausführungsform der Erfindung;
- Figur 3:: Eine schematische Darstellung des Druckluftflusses in einer Druckluftvorrichtung für eine Luftfederung eines Kraftfahrzeugs gemäß einer dritten Ausführungsform der Erfindung;
- Figur 4:: Ein Kraftfahrzeug mit einer Druckluftvorrichtung für eine Luftfederung gemäß einer Ausführungsform der Erfindung; und
- Figur 5:: Ein Verfahren zum Betrieb einer Druckluftvorrichtung für eine Luftfederung eines Kraftfahrzeugs gemäß einer Ausführungsform der Erfindung.

Gleiche oder funktional äquivalente Elemente sind dabei in allen Figuren mit denselben Bezugszeichen beschrieben und zum Teil nicht gesondert beschrieben.

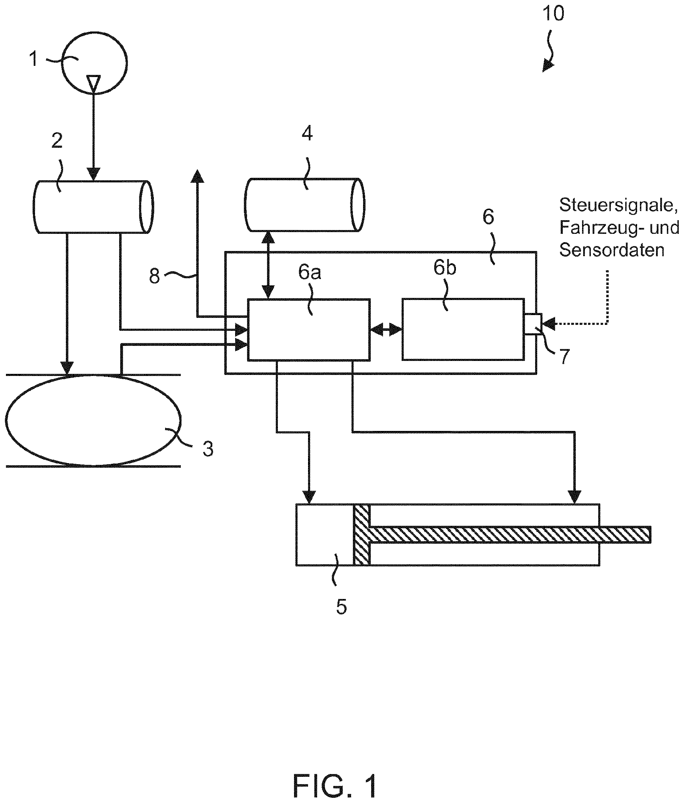

Figur 1 zeigt eine Druckluftvorrichtung 10 für eine Luftfederung eines Kraftfahrzeugs 20 gemäß einer Ausführungsform der Erfindung. Die Druckluftvorrichtung 10 umfasst hier eine Drucklufterzeugungseinrichtung 1 in Form eines Kolbenkompressors, einen ersten Vorratsbehälter 2 zur Lagerung von Druckluft sowie einen Luftfederbalg 3. Vorliegend wird dabei der erste Vorratsbehälter 2 von der Drucklufterzeugungseinrichtung 1 mit Druckluft versorgt und der eine Luftfederbalg 3 wird aus dem ersten Vorratsbehälter 2 mit Druckluft versorgt. Vorzugsweise umfasst die Druckluftvorrichtung 10 ferner weitere (nicht dargestellte) Luftfederbälge 3, die allesamt beispielsweise zur Niveauänderung des Kraftfahrzeugs 20 zwischen den jeweiligen Fahrzeugachsen und dem Fahrzeugaufbau montiert sein können und ein Absenken und/oder Anheben des Fahrzeugaufbaus relativ zur Straße ermöglichen können. Besonders bevorzugt handelt es sich bei dem Kraftfahrzeug 20 ferner um einen Omnibus.

Des Weiteren umfasst die Druckluftvorrichtung 10 einen zweiten Vorratsbehälter 4 zur Lagerung von Druckluft, einen druckluftbetätigten Verbraucher 5 - vorliegend in Form einer Antriebseinrichtung zum Öffnen und/oder Schließen einer Tür 21 des Kraftfahrzeugs 20 - sowie eine elektro-pneumatische Steuereinrichtung 6. Letztere umfasst in der vorliegenden Ausführungsform ein Pneumatikmodul 6a mit elektrisch ansteuerbaren pneumatischen Ventilen (nicht dargestellt) sowie ein Elektronikmodul 6b zur Ansteuerung dieser Ventile. Zum Schutz vor Feuchtigkeit und Schmutz können das Pneumatik- und Elektronikmodul 6a, 6b - wie dargestellt - von einem gemeinsamen Gehäuse umhaust werden. Das Pneumatikmodul 6a steht ferner über pneumatische Förderleitungen, die auch als Druckluftleitungen bezeichnet werden können, mit dem ersten und zweiten Vorratsbehälter 2, 4, dem mindestens einen Luftfederbalg 3, dem druckluftbetätigten Verbraucher 5 und einer Abluftleitung 8 in Verbindung und ist ausgebildet, eine Verteilung von Druckluft zwischen diesen Komponenten mittels der elektrisch ansteuerbaren Ventile vorzunehmen. Darüber hinaus kann das Elektronikmodul 6b der elektro-pneumatische Steuereinrichtung 6 über eine Schnittstelle 7 auch Fahrzeugdaten und/oder Sensordaten und/oder Steuersignale empfangen, um auf Basis dieser Informationen dann eine Verteilung von Druckluft vorzunehmen.

Beispielsweise kann das Elektronikmodul 6b - und damit insbesondere die elektro-pneumatische Steuereinrichtung 6 - Sensordaten betreffend eine Druckluftmenge und/oder einen Innendruck des ersten und/oder zweiten Vorratsbehälters 2, 4 empfangen. Zudem oder alternativ kann die elektro-pneumatische Steuereinrichtung 6 auch ein Steuersignal zum Entlüften des Luftfederbalgs 3 und/oder ein Steuersignal zum Bewegen des druckluftbetätigten Verbrauchers 5 - vorliegend der Antriebseinrichtung zum Öffnen und/oder Schließen einer Tür 21 des Kraftfahrzeugs 20 - empfangen. Die Antriebseinrichtung ist vorliegend als pneumatische Kolben-Zylinder-Einrichtung ausgebildet, die reversibel und stufenlos in eine erste und eine zweite Stellung bewegbar ist, wobei ein Wechsel zwischen der ersten und zweiten Stellung jeweils durch ein Zuleiten von Druckluft in die Antriebseinheit erfolgt. Hierfür ist die Antriebseinheit an jeweils zwei Stellen über je eine pneumatischer Förderleitungen mit dem Pneumatikmodul 6a verbunden. Für ihre ordnungsgemäße Funktion kann die pneumatische Kolben-Zylinder-Einrichtung ferner noch weitere nicht explizit dargestellt Bauteile, darunter Dichtungen, Lager, Führungsbänder, Magnete etc., umfassen. Auch kann die Druckluftvorrichtung 10 selbst noch weitere - für derartige Systeme übliche und daher nicht explizit dargestellte - Bauteile, darunter Rückschlagventile, Lufttrockner, Filter, Temperaturregler, etc., umfassen.

Nachdem bislang in erster Linie die konstruktiven Merkmale der Druckluftvorrichtung 10 besprochen wurden, soll im Folgenden genauer auf deren Funktionsweise eingegangen werden. Der Grundgedanke der beanspruchten Druckluftvorrichtung 10 liegt wie bereits erwähnt darin, dass Abluft, die bei der Entleerung des Luftfederbalgs 3 anfällt, nicht ungenutzt in die Atmosphäre entweicht, sondern über entsprechende pneumatische Förderleitungen - und gesteuert durch die elektro-pneumatische Steuereinrichtung 6 - zumindest zu einem Teil dem zweiten Vorratsbehälter 4 zugeführt wird. Vorzugsweise tritt dabei die Entleerung des mindestens einen Luftfederbalgs 3 im Zusammenhang mit einem "*Kneeling*"*-Vorgang* des Kraftfahrzeugs 20 auf. Nach Zwischenlagerung der Druckluft im zweiten Vorratsbehälter4, kann diese dann dem druckluftbetätigten Verbraucher 5 für dessen Betrieb zugeleitet werden. Mit anderen Worten wird Druckluft, die vormals zur Befüllung des Luftfederbalgs 3 verwendet wurde, nun zum Betrieb des druckluftbetätigten Verbrauchers 5 verwendet. Vorzugsweise benötigt der druckluftbetätigte Verbraucher 5 hierbei ein geringeres Druckniveau als der Luftfederbalg 3 in Normallage.

Die Zuleitung der Druckluft vom zweiten Vorratsbehälter 4 an die Antriebseinrichtung wird vorliegend über die elektro-pneumatische Steuereinrichtung 6 gesteuert. Hierzu wird Druckluft über eine erste Druckluftleitung einen ersten Bereich des doppelwirkenden Zylinders eingelassen wodurch ein im Zylinder gelagerter Kolben, der mittels einem nicht gezeigten Türmechanismus in Verbindung steht, bewegt werden kann. Reicht die im zweiten Vorratsbehälter 4 vorhandene Druckluft nicht aus und/oder ist das im zweiten Vorratsbehälter 4 vorhandene Druckniveau zu gering, um die Antriebseinrichtung ordnungsgemäß zu bewegen, kann die elektro-pneumatische Steuereinrichtung 6 zusätzlich Druckluft aus dem ersten Vorratsbehälter 2 zu der Antriebseinrichtung leiten. Dadurch kann auf vorteilhafte Weise eine effiziente und bedarfsgerechte Nutzung der im System vorhanden Druckluft erreicht werden.

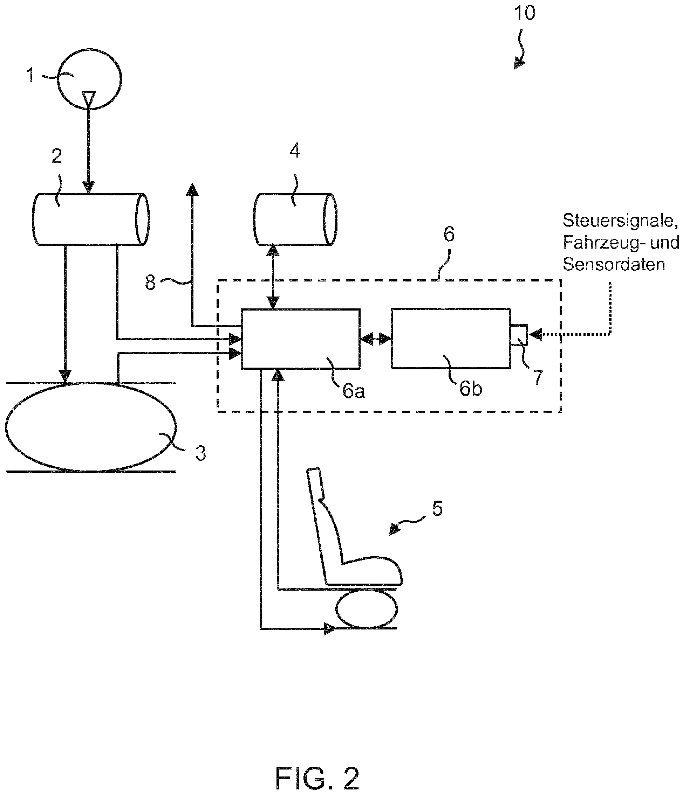

Figur 2 zeigt eine Druckluftvorrichtung 10 für eine Luftfederung eines Kraftfahrzeugs 20 gemäß einer weiteren Ausführungsform der Erfindung. Im Gegensatz zu der in Figur 1 gezeigten Ausführungsform handelt es sich bei dem druckluftbetätigten Verbraucher 5 hier um einen Fahrzeugsitz, insbesondere um eine pneumatische Sitzfederung eines Fahrzeugsitzes. Wie im Fall der Antriebsvorrichtung in Figur 1 wird auch die pneumatische Sitzfederung des Fahrzeugsitzes mittels zuvor aus dem Luftfederbalg 3 "*recycelter*" Druckluft betrieben. Auf vorteilhafte Weise kann somit wiederum Kraftstoff und/oder Energie, die ansonsten zur Erzeugung der Druckluft für den Fahrzeugsitzes verwendet werden müsste, eingespart werden.

Ein weiterer Unterschied im Vergleich zu der in Figur 1 gezeigten Ausführungsform besteht in der Größe des zweiten Vorratsbehälters 4. Dieser ist im Vergleich zum ersten Vorratsbehälter 2 kleiner ausgelegt ist. Mit anderen Worten besitzt der zweite Vorratsbehälter 4 ein kleineres Füllvolumen als der erste Vorratsbehälter 2. Der zweite Vorratsbehälter 4 kann allerdings auch identisch (wie in Figur eins gezeigt) zum ersten Vorratsbehälter 2 ausgebildet sein oder ein größeres Füllvolumen als der erste Vorratsbehälter 2 aufweisen. Zudem oder alternativ kann sich der zweite Vorratsbehälter 4 auch konstruktiv vom ersten Vorratsbehälter 2 unterscheiden. Beispielsweise kann es sich bei zweiten Vorratsbehälter 4 um ein Reserverad des Kraftfahrzeugs handeln.

Ferner ist bei dieser Ausführungsform das elektro-pneumatische Steuermodul 6 im Form eines separaten Pneumatikmoduls 6a und eines separaten Elektronikmoduls 6b ausgebildet, welche nicht von einem gemeinsamen Gehäuse umhaust werden, jedoch über entsprechende Kommunikationsleitungen in Verbindung stehen und hierdurch beispielsweise Steuersignale austauschen können. Die generelle Betriebsweise des elektro-pneumatischen Steuermoduls 6 unterscheidet sich allerdings nicht zu dem in Figur 1 beschriebenen Fall.

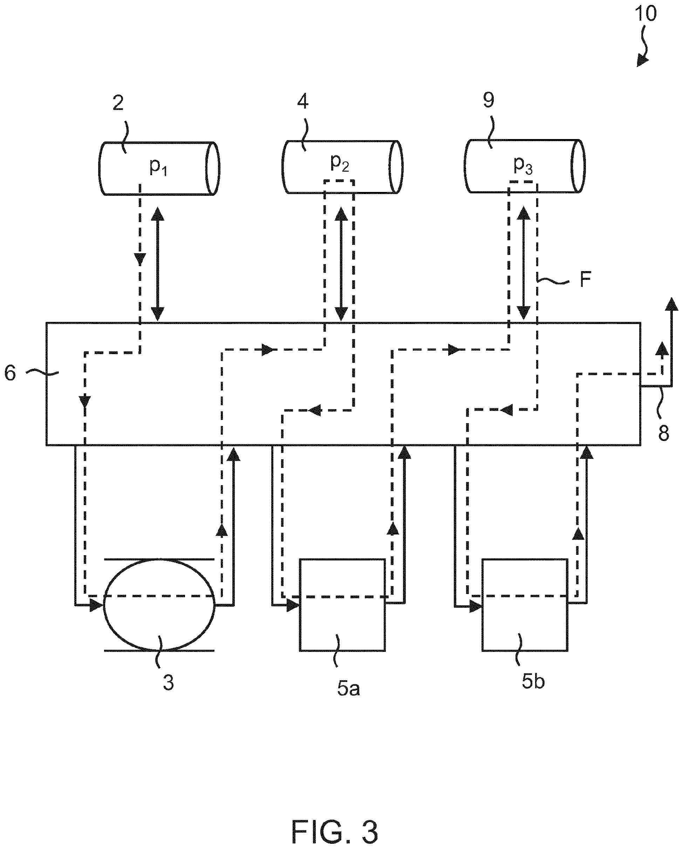

Figur 3 zeigt eine schematische Darstellung des Druckluftflusses F in einer Druckluftvorrichtung 10 für eine Luftfederung eines Kraftfahrzeugs 20 gemäß einer dritten "*mehrstufigen*" Ausführungsform der Erfindung. Im Gegensatz zu den bisherigen Ausführungsformen umfasst diese dabei drei Vorratsbehälter 2, 4, 9, die im Folgenden als erster, zweiter, und dritter Vorratsbehälter 2, 4, 9 bezeichnet werden. Die drei Vorratsbehälter 2, 4, 9 weisen dabei verschiedene Druckniveaus p₁, p₂, p₃ auf, wobei vorzugsweise das Druckniveau des ersten Vorratsbehälters p₁ größer als das des zweiten Vorratsbehälter p₂ und das wiederum größer als das des dritten Vorratsbehälter p₃ sein kann. Lediglich beispielhaft könnte der durchschnittliche Druck im ersten Vorratsbehälter p₁=15 bar, der durchschnittliche Druck im zweiten Vorratsbehälter p₂=10 bar und der durchschnittliche Druck im dritten Vorratsbehälter p₃=5 bar betragen. Allerdings können auch andere Verteilungen der Druckluftniveaus p₁, p₂, p₃ in den Vorratsbehältern 2, 4, 9 vorliegen und/oder noch weitere Vorratsbehälter in der Druckluftvorrichtung 10 vorhanden sein, ohne den Bereich der Erfindung zu verlassen. Auch können die Vorratsbehälter 2, 4, 9 jeweils mit weiteren Kolbenkompressoren und/oder Verdichtern in Verbindung stehen.

Ferner umfasst die Druckluftvorrichtung 10 einen Luftfederbalg, vorzugsweise zur Niveauänderung des Kraftfahrzeugs 20, sowie zwei druckluftbetätigte Verbraucher 5a, 5b, die im Folgenden als erster und zweiter druckluftbetätigter Verbraucher 5a, 5b bezeichnet werden. Bei dem ersten druckluftbetätigten Verbraucher 5a kann es sich beispielsweise um eine Haltestellenbremse und bei dem zweiten druckluftbetätigten Verbraucher 5b beispielsweise um ein Getriebe mit Schaltunterstützung handeln. Die verschiedenen Komponenten stehen dabei - wie bereits in den vorherigen Ausführungsformen - über entsprechende Druckluftleitungen mit einer elektro-pneumatischen Steuereinrichtung 6, die wiederum ein Pneumatikmodul 6a sowie ein Elektronikmodul 6b umfassen kann, in Verbindung.

In einer besonders bevorzugten "*mehrstufigen*" Betriebsweise der gezeigten Ausführungsform wird zunächst der Luftfederbalg 3 mit Druckluft aus dem ersten Vorratsbehälter 2 befüllt, bis der Luftfederbalg 3 seine Normallage erreicht. Die bei einer anschließenden Entleerung des Luftfederbalgs 3, beispielsweise im Zuge eines Absenken des Fahrzeugniveaus an einer Haltestelle, anfallende Abluft wird vorliegend über die elektro-pneumatische Steuereinrichtung 6 zumindest zu einem Teil dem zweiten Vorratsbehälter 4 zugeleitet. Ausgehend von diesem zweiten Vorratsbehälter 4 kann dann der erste druckluftbetätigte Verbraucher 5a, beispielsweise eine Haltestellenbremse, mit Druckluft, die vormals zur Befüllung des Luftfederbalgs 3 verwendete wurde, versorgt werden. Die bei einer anschließenden Entleerung des ersten druckluftbetätigten Verbrauchers 5a anfallende Abluft, beispielsweise beim Lösen der Haltestellenbremse, kann dann über die elektro-pneumatische Steuereinrichtung 6 dem dritten Vorratsbehälter 9 zugeführt werden. Die dort gesammelte und somit bereits zwei Mal "*recycelte*" Druckluft kann dann wiederum zum Betrieb des zweiten druckluftbetätigten Verbrauchers 5b, beispielsweise einem Getriebe mit Schaltunterstützung, verwendet werden. Die bei einer Entleerung des zweiten druckluftbetätigten Verbrauchers 5b anfallende Abluft wird zuletzt an über eine Abluftleitung 8 an die Atmosphäre abgegeben und steht damit für eine weitere Verwendung im Kraftfahrzug 20 nicht mehr zur Verfügung. Auf vorteilhafte Weise wird somit insgesamt ein "*mehrstufiges*" Recyceln von Druckluft und damit eine Einsparen von Ressourcen, Kraftstoff und/oder Energie erreicht. Neben dem eben beschrieben "*zwei-stufigen*" Prozess kann die Druckluftvorrichtung 10 auch noch weitere "*Recycle-Stufen*" umfassen, ohne dabei den Bereich der Erfindung zu verlassen.

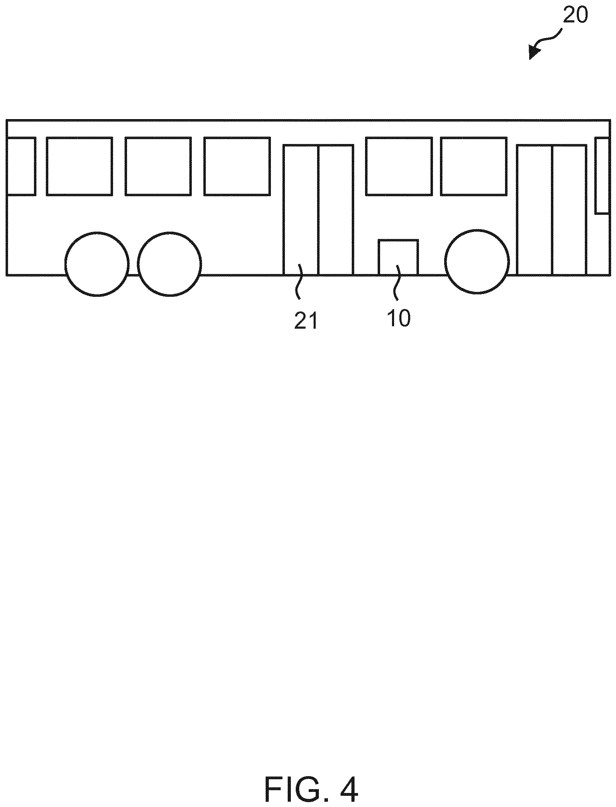

Figur 4 zeigt ein Kraftfahrzeug 20 mit einer Druckluftvorrichtung 10 für eine Luftfederung gemäß einer Ausführungsform der Erfindung. Im vorliegenden Fall handelt es sich bei dem Kraftfahrzeug dabei um einen Omnibus, vorzugsweise einen Stadtbus. Vorzugsweise ist die Druckluftvorrichtung 10 hierbei eingerichtet, Luftfederbälge 3 zur Niveauregulierung des Kraftfahrzeugs 20, beispielsweise im Zuge von *"Kneeling"-Vorgängen* an Haltestellen, mit Druckluft zu versorgen und die bei einer Entleerung der Luftfederbälge 3 anfallende Abluft zur Versorgung einer Antriebsvorrichtung zum Öffnen und/oder Schließen einer Tür 21 des Kraftfahrzeugs 20 zuzuleiten.

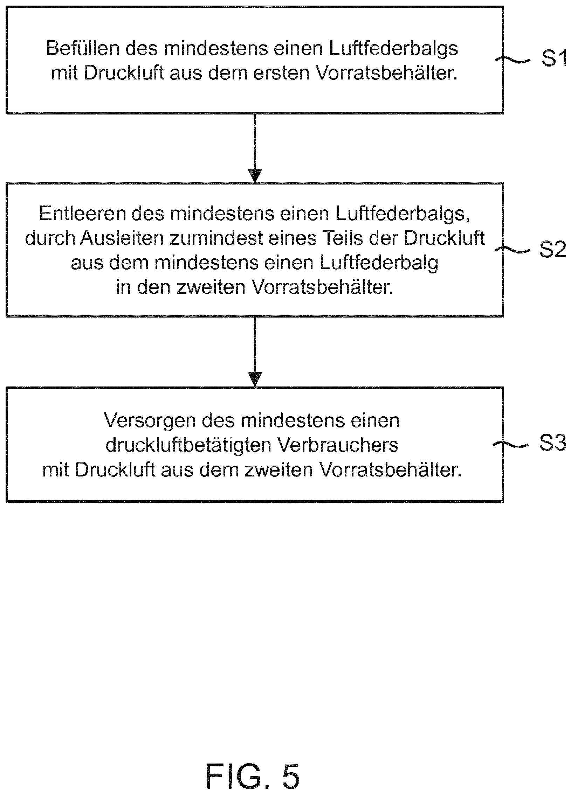

Figur 5 zeigt ein Verfahren zum Betrieb einer Druckluftvorrichtung 10 für eine Luftfederung eines Kraftfahrzeugs 20 gemäß einer Ausführungsform der Erfindung. Die Druckluftvorrichtung 10 umfasst dabei eine Drucklufterzeugungseinrichtung 1, beispielsweise einen Kolbenkompressor und/oder einen Verdichter, mindestens einen Luftfederbalg 3 sowie einen ersten und zweiten Vorratsbehälter 2, 4 zur Lagerung von Druckluft. Im Schritt S1 des Verfahrens wird der mindestens eine Luftfederbalg 3 mit Druckluft aus dem ersten Vorratsbehälter 2 befüllt. Falls das Fahrzeug mehrere Luftfederbälge umfasst, können dabei im Schritt S1 alle im Fahrzeug vorhanden Luftfederbälge 3, aber auch nur einzelne der Luftfederbälge 3 mit Druckluft befüllt werden. Im Schritt S2 wird dann der mindestens eine Luftfederbalg 3, durch Ausleiten zumindest eines Teils der Druckluft aus dem mindestens einen Luftfederbalg 3 in den zweiten Vorratsbehälter 4 entleert. Der Ausdruck "*entleeren*" kann dabei sowohl ein vollständiges, aber auch nur ein teilentleeren des Luftfederbalg 3 bezeichnen. Ferner kann hierzu der mindestens einen Luftfederbalg 3 mit dem zweiten Vorratsbehälter 4 über entsprechende Druckluftleitungen in Verdingung stehen. Falls die Druckluftvorrichtung 10 auch einen druckluftbetätigen Verbraucher 5, beispielweise in Form eines Pneumatikstellers, umfasst, kann in einem Schritt S3 der mindestens eine druckluftbetätigte Verbraucher 5 mit Druckluft aus dem zweiten Vorratsbehälter 4 versorgt werden. Durch den Betrieb derartiger Verbraucher durch "*wiederverwendete*" Druckluft kann dabei auf vorteilhafte Weise Kraftstoff bzw. Energie eingespart werden, die ansonsten zur Erzeugung der Druckluft diese Verbraucher 5, beispielsweise mittels eines Kolbenkompressors, aufgewendet werden müsste.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Drucklufterzeugungseinrichtung
- 2: Erster Vorratsbehälter
- 3: Luftfederbalg
- 4: Zweiter Vorratsbehälter
- 5: Druckluftbetätigter Verbraucher
- 5a: Erster druckluftbetätigter Verbraucher
- 5b: Zweiter druckluftbetätigter Verbraucher
- 6: Elektro-pneumatische Steuereinrichtung
- 6a: Pneumatikmodul
- 6b: Elektronikmodul
- 7: Schnittstelle
- 8: Abluftleitung
- 9: Dritter Vorratsbehälter
- 10: Druckluftvorrichtung
- 20: Kraftfahrzeug
- 21: Kraftfahrzeugtür
- p₁: Druck im ersten Vorratsbehälter
- p₂: Druck im zweiten Vorratsbehälter
- p₃: Druck im dritten Vorratsbehälter
- F: Druckluftfluss

## Patentansprüche

1. Druckluftvorrichtung (10) für eine Luftfederung eines Kraftfahrzeugs (20), vorzugsweise für eine Luftfederung eines Omnibusses, umfassend
- eine Drucklufterzeugungseinrichtung (1), vorzugsweise einen Kolbenkompressor,
- einen ersten Vorratsbehälter (2) zur Lagerung von Druckluft,
- mindestens einen Luftfederbalg (3), vorzugsweise zur Niveauänderung des Kraftfahrzeugs (20), der mit Druckluft aus dem ersten Vorratsbehälter (2) und/oder aus der Drucklufterzeugungseinrichtung (1) versorgt wird,
- einen zweiten Vorratsbehälter (4) zur Lagerung von Druckluft,
- mindestens einen druckluftbetätigten Verbraucher (5); und
- eine elektro-pneumatische Steuereinrichtung (6), die über pneumatische Förderleitungen in Verbindung mit dem ersten und zweiten Vorratsbehälter (2, 4), dem mindestens einen Luftfederbalg (3) und dem mindestens einen druckluftbetätigten Verbraucher (5) steht und ausgebildet ist, mittels elektrisch ansteuerbarer pneumatischer Ventile eine Verteilung von Druckluft zwischen diesen Komponenten vorzunehmen,
wobei die Druckluftvorrichtung (10) ausgebildet ist, die bei einer Entleerung des mindestens einen Luftfederbalgs (3) anfallende Abluft zumindest zu einem Teil dem zweiten Vorratsbehälter (4) zu dessen Befüllung zuzuleiten; und
wobei die Druckluftvorrichtung (10) ausgebildet ist, Druckluft aus dem zweiten Vorratsbehälter (4) - die vorzugsweise vormals zur Befüllung des Luftfederbalgs (3) verwendet wurde - dem mindestens einen druckluftbetätigten Verbraucher (5) zuzuleiten.

2. Druckluftvorrichtung (10) nach Anspruch 1, **dadurch gekennzeichnet, dass** es sich bei dem zweiten Vorratsbehälter (4) um ein Reserverad des Kraftfahrzeugs (20) handelt.

3. Druckluftvorrichtung (10) nach einem der vorherigen Ansprüche, **dadurch gekennzeichnet, dass** der mindestens eine druckluftbetätigte Verbraucher (5) eine Antriebseinrichtung, vorzugsweise eine pneumatische Kolben-Zylinder-Einrichtung, zum Öffnen und/oder Schließen einer Tür (21) des Kraftfahrzeugs (20), vorzugsweise einer Tür eines Omnibusses, ist oder umfasst.

4. Druckluftvorrichtung (10) nach Anspruch 3, **dadurch gekennzeichnet, dass** die Antriebseinrichtung reversibel, und vorzugsweise stufenlos, in eine erste und eine zweite Stellung bewegbar ist, wobei ein Wechsel zwischen der ersten und zweiten Stellung jeweils durch Zuleiten von Druckluft in die Antriebseinrichtung erfolgt.

5. Druckluftvorrichtung (10) nach einem der vorherigen Ansprüche, **dadurch gekennzeichnet, dass** der mindestens eine druckluftbetätigte Verbraucher (5)
a. eine Haltestellenbremse,
b. eine Betriebsbremse,
c. ein Druckluftverbraucher eines Fahrzeugsitzes, vorzugsweise eine Sitzfederung, Lordosenstütze, Massageeinrichtung und/oder eine Schweißkühlung,
d. ein Druckluftreiniger zur Innenraumausblasung,
e. eine Einrichtung zur Druckluftreinigung optischer Sensoren,
f. ein Getriebe mit Schaltunterstützung,
g. ein Drehgelenk mit einstellbarer Dämpfung,
h. ein Reifen, und/oder
i. ein Pneumatiksteller
ist oder umfasst.

6. Druckluftvorrichtung (10) nach einem der vorherigen Ansprüche, **dadurch gekennzeichnet, dass** die Druckluftvorrichtung (10) ausgebildet ist, Druckluft aus dem ersten Vorratsbehälter (2) dem mindestens einen druckluftbetätigten Verbraucher (5) und/oder dem zweiten Vorratsbehälter (4) zuzuleiten, vorzugsweise dann, falls eine Druckluftmenge oder ein Innendruck im zweiten Vorratsbehälter (4) einen ersten Schwellenwert unterschreitet.

7. Druckluftvorrichtung (10) nach einem der vorherigen Ansprüche, **dadurch gekennzeichnet, dass** die elektro-pneumatische Steuereinrichtung (6) ausgebildet ist, eine Verteilung von Druckluft zwischen den angeschlossenen Komponenten auf Basis von über eine Schnittstelle (7) empfangener Fahrzeug- und/oder Sensordaten vorzunehmen.

8. Druckluftvorrichtung (10) nach Anspruch 7, **dadurch gekennzeichnet, dass** die elektro-pneumatische Steuereinrichtung (6)
a) ein Pneumatikmodul (6a), dem die elektrisch ansteuerbaren pneumatischen Ventile zur Verteilung der Druckluft zugeordnet sind, und ein Elektronikmodul (6b) zur Ansteuerung besagter Ventile umfasst, wobei das Pneumatikmodul (6a) und das Elektronikmodul (6b) als separate Bauteile ausgeführt sind oder von einem gemeinsamen Gehäuse umhaust werden und/oder
b) ausgebildet ist, in Abhängigkeit von einer Druckluftmenge und/oder von einem Innendruck und einem Fassungsvermögen des ersten und zweiten Vorratsbehälters (2, 4) Druckluft wahlweise aus dem ersten und/oder zweiten Vorratsbehälter (2, 4) dem mindestens einem druckluftbetätigten Verbraucher (5) zuzuleiten.

9. Druckluftvorrichtung (10) nach Anspruch 7 oder 8, **dadurch gekennzeichnet, dass** die elektro-pneumatische Steuereinrichtung (6) ausgebildet ist, in Abhängigkeit von einem prognostizierten und/oder aktuellen Druckluftbedarf des mindestens einen druckluftbetätigten Verbrauchers (5) Druckluft wahlweise aus dem ersten und/oder zweiten Vorratsbehälter (2, 4) dem mindestens einem druckluftbetätigten Verbraucher (5) zuzuleiten.

10. Druckluftvorrichtung (10) nach einem der vorherigen Ansprüche, **dadurch gekennzeichnet, dass** die Druckluftvorrichtung (10) mindestens zwei druckluftbetätigten Verbraucher (5) und einen dritten Vorratsbehälter zur Lagerung (9) von Druckluft umfasst, wobei die Druckluftvorrichtung ausgebildet ist, zumindest einen Teil der Abluft von einem der druckluftbetätigten Verbraucher zunächst dem dritten Vorratsbehälter (9) und von dort einen weiteren druckluftbetätigten Verbraucher (5) zuzuleiten.

11. Kraftfahrzeug (20), vorzugsweise Omnibus, umfassend eine Druckluftvorrichtung (10) nach einem der vorherigen Ansprüche.

12. Verfahren zum Betrieb einer Druckluftvorrichtung (10) für eine Luftfederung eines Kraftfahrzeugs (20), vorzugsweise für eine Luftfederung eines Omnibusses, umfassend
- eine Drucklufterzeugungseinrichtung (1), vorzugsweise einen Kolbenkompressor,
- einen ersten Vorratsbehälter (2) zur Lagerung von Druckluft,
- mindestens einen Luftfederbalg (3), vorzugsweise zur Niveauänderung des Kraftfahrzeugs (20),
- einen zweiten Vorratsbehälter (4) zur Lagerung von Druckluft, und
- mindestens einen druckluftbetätigten Verbraucher (5)
umfassend die Schritte:
- Befüllen des mindestens einen Luftfederbalgs (3) mit Druckluft aus dem ersten Vorratsbehälter (2) und/oder der Drucklufterzeugungseinrichtung (1),
- Entleeren des mindestens einen Luftfederbalgs (3), durch Ausleiten zumindest eines Teils der Druckluft aus dem mindestens einen Luftfederbalg (3) in den zweiten Vorratsbehälter (4); und
- Versorgen des mindestens einen druckluftbetätigten Verbrauchers (5) mit Druckluft aus dem zweiten Vorratsbehälter (4).

## Claims

1. Compressed air device (10) for an air suspension of a motor vehicle (20), preferably for an air suspension of a bus, comprising
- a compressed air generating device (1), preferably a piston compressor,
- a first reservoir (2) for storing compressed air,
- at least one air suspension bellow (3), preferably for levelling the motor vehicle (20), which is supplied with compressed air from the first reservoir (2) and/or from the compressed air generation device (1),
- a second reservoir (4) for storing compressed air,
- at least one compressed air-actuated consumer (5); and
- an electro-pneumatic control device (6), which is connected via pneumatic supply lines to the first and second reservoirs (2, 4), the at least one air suspension bellow (3), and the at least one compressed air-actuated consumer (5), and is configured to distribute compressed air between these components by electrically controllable pneumatic valves,
wherein the compressed air device (10) is configured to supply at least a portion of waste air produced when the at least one air suspension bellow (3) is emptied to the second reservoir (4) for filling the latter; and
wherein the compressed air device (10) is configured to supply compressed air from the second reservoir (4) - which was preferably previously used for filling the air suspension bellow (3) - to the at least one compressed air-actuated consumer (5).

2. Compressed air device (10) according to claim 1, **characterized in that** the second reservoir (4) is a spare wheel of the motor vehicle (20).

3. Compressed air device (10) according to one of the previous claims, **characterized in that** the at least one compressed air-actuated consumer (5) is or comprises a drive device, preferably a pneumatic piston-cylinder device, for opening and/or closing a door (21) of the motor vehicle (20), preferably a door of a bus.

4. Compressed air device (10) according to claim 3, **characterized in that** the drive device can be moved reversibly, and preferably steplessly, into a first and a second position, wherein a change between the first and second position being effected in each case by supplying compressed air to the drive device.

5. Compressed air device (10) according to one of the preceding claims, **characterized in that** the at least one compressed air-actuated consumer (5) is or comprises
a. a holding brake,
b. a service brake,
c. a compressed air consumer of a vehicle seat, preferably a seat suspension, lumbar support, massage device and/or a weld cooling,
d. a compressed air cleaner for blowing out the interior,
e. a device for compressed air cleaning of optical sensors,
f. a gearbox with gearshift support,
g. a swivel joint with adjustable damping,
h. a tire, and/or
i. a pneumatic actuator

6. Compressed air device (10) according to one of the preceding claims, **characterized in that** the compressed air device (10) is configured to supply compressed air from the first reservoir (2) to the at least one compressed air-actuated consumer (5) and/or the second reservoir (4), preferably if a compressed air quantity or an internal pressure in the second reservoir (4) falls below a first threshold value.

7. Compressed air device (10) according to one of the preceding claims, **characterized in that** the electro-pneumatic control device (6) is configured to distribute compressed air between the connected components on the basis of vehicle and/or sensor data received via an interface (7).

8. Compressed air device (10) according to claim 7, **characterized in that** the electro-pneumatic control device (6)
a) comprises a pneumatic module (6a), to which the electrically controllable pneumatic valves for distributing the compressed air are assigned, and an electronic module (6b) for controlling said valves, the pneumatic module (6a) and the electronic module (6b) being configured as separate components or being enclosed by a common housing and/or
b) is configured to selectively supply compressed air from the first and/or second reservoir (2, 4) to the at least one compressed air-actuated consumer (5) as depending on a compressed air quantity and/or on an internal pressure and a capacity of the first and second reservoir (2, 4).

9. Compressed air device (10) according to claim 7 or 8, **characterized in that** the electro-pneumatic control device (6) is configured to supply compressed air selectively from the first and/or second reservoir (2, 4) to the at least one compressed air-actuated consumer (5) as a function of a predicted and/or actual compressed air requirement of the at least one compressed air-actuated consumer (5).

10. Compressed air device (10) according to one of the preceding claims, **characterized in that** the compressed air device (10) comprises at least two compressed air-actuated consumers (5) and a third reservoir for storing (9) compressed air, wherein the compressed air device is configured to supply at least a portion of the exhaust air from one of the compressed air-actuated consumers first to the third reservoir (9) and from there to a further compressed air-actuated consumer (5).

11. Motor vehicle (20), preferably a bus, comprising a compressed air device (10) according to one of the preceding claims.

12. Method for operating a compressed air device (10) for an air suspension of a motor vehicle (20), preferably for an air suspension of a bus, comprising
- a compressed air generating device (1), preferably a piston compressor,
- a first reservoir (2) for storing compressed air,
- at least one air suspension bellow (3), preferably for levelling the vehicle (20),
- a second reservoir (4) for storing compressed air, and
- at least one compressed air-actuated consumer (5)
comprising the steps of:
- filling the at least one air suspension bellow (3) with compressed air from the first reservoir (2) and/or the compressed air generating device (1),
- emptying the at least one air suspension bellow (3) by discharging at least part of the compressed air from the at least one air suspension bellow (3) into the second reservoir (4); and
- supplying the at least one compressed air-actuated consumer (5) with compressed air from the second reservoir (4).

## Revendications

1. Arrangement d'air comprimé (10) pour une suspension pneumatique d'un véhicule automobile (20), de préférence pour une suspension pneumatique d'un autobus, comprenant
- un dispositif de génération d'air comprimé (1), de préférence un compresseur à piston,
- un premier récipient de stockage (2) destiné au stockage d'air comprimé,
- au moins un soufflet de suspension pneumatique (3), de préférence destiné au changement de niveau du véhicule automobile (20), lequel est alimenté en air comprimé à partir du premier récipient de stockage (2) et/ou à partir du dispositif de génération d'air comprimé (1),
- un deuxième récipient de stockage (4) destiné au stockage d'air comprimé,
- au moins un consommateur (5) actionné par air comprimé ; et
- un dispositif de commande électropneumatique (6), qui se trouve en liaison par le biais de conduites de transport pneumatiques avec les premier et deuxième récipients de stockage (2, 4), l'au moins un soufflet de suspension pneumatique (3) et l'au moins un consommateur (5) actionné par air comprimé et configuré pour procéder à une distribution de l'air comprimé entre ces composants au moyen de vannes pneumatiques commandables électriquement,
l'arrangement d'air comprimé (10) étant configuré pour acheminer l'air évacué produit lors d'un vidage de l'au moins un soufflet de suspension pneumatique (3) au moins en partie au deuxième récipient de stockage (4) en vue de son remplissage ; et
l'arrangement d'air comprimé (10) étant configuré pour acheminer l'air comprimé issu du deuxième récipient de stockage (4), qui a de préférence été utilisé auparavant pour le remplissage du soufflet de suspension pneumatique (3), à l'au moins un consommateur (5) actionné par air comprimé.

2. Arrangement d'air comprimé (10) selon la revendication 1, **caractérisé en ce que** le deuxième récipient de stockage (4) est une roue de secours du véhicule automobile (20).

3. Arrangement d'air comprimé (10) selon l'une des revendications précédentes, **caractérisé en ce que** l'au moins un consommateur (5) actionné par air comprimé est ou comprend un dispositif d'entraînement, de préférence un dispositif à piston et cylindre pneumatique, destiné à ouvrir et/ou fermer une porte (21) du véhicule automobile (20), de préférence une porte d'un autobus.

4. Arrangement d'air comprimé (10) selon la revendication 3, **caractérisé en ce que** le dispositif d'entraînement peut être déplacé de manière réversible, et de préférence en continu, dans une première et une deuxième position, un changement entre la première et la deuxième position s'effectuant respectivement par acheminement d'air comprimé dans le dispositif d'entraînement.

5. Arrangement d'air comprimé (10) selon l'une des revendications précédentes, **caractérisé en ce que** l'au moins un consommateur (5) actionné par air comprimé est ou comprend
a. un frein de point d'arrêt,
b. un frein de service,
c. un consommateur d'air comprimé d'un siège de véhicule, de préférence une suspension de siège, un soutien lombaire, un dispositif de massage et/ou un système de rafraîchissement anti-transpiration,
d. un purificateur d'air comprimé destiné au soufflage dans l'habitacle,
e. un dispositif de nettoyage à l'air comprimé de capteurs optiques,
f. une boîte de vitesses avec assistance au changement de rapport,
g. une articulation tournante avec amortissement réglable,
h. un pneu et/ou
i. un actionneur pneumatique.

6. Arrangement d'air comprimé (10) selon l'une des revendications précédentes, **caractérisé en ce que** l'arrangement d'air comprimé (10) est configuré pour acheminer de l'air comprimé issu du premier récipient de stockage (2) à l'au moins un consommateur (5) actionné par air comprimé et/ou au deuxième récipient de stockage (4), de préférence dans le cas où une quantité d'air comprimé ou une pression interne dans le deuxième récipient de stockage (4) devient inférieure à une première valeur de seuil.

7. Arrangement d'air comprimé (10) selon l'une des revendications précédentes, **caractérisé en ce que** le dispositif de commande électropneumatique (6) est configuré pour procéder à une distribution d'air comprimé entre les composants raccordés sur la base de données de véhicule et/ou de capteur reçues par le biais d'une interface (7).

8. Arrangement d'air comprimé (10) selon la revendication 7, **caractérisé en ce que** le dispositif de commande électropneumatique (6)
a) comporte un module pneumatique (6a), auquel sont associées les vannes pneumatiques commandables électriquement pour la distribution de l'air comprimé, et un module électronique (6b) destiné à commander lesdites vannes, le module pneumatique (6a) et le module électronique (6b) étant réalisés sous forme de composants séparés ou étant entourés par un boîtier commun et/ou
b) est configuré pour, en fonction d'une quantité d'air comprimé et/ou d'une pression interne et d'une capacité des premier et deuxième récipients de stockage (2, 4), acheminer de l'air comprimé au choix depuis le premier et/ou le deuxième récipient de stockage (2, 4) à l'au moins un consommateur (5) actionné par air comprimé.

9. Arrangement d'air comprimé (10) selon la revendication 7 ou 8, **caractérisé en ce que** le dispositif de commande électropneumatique (6) est configuré pour acheminer de l'air comprimé au choix depuis le premier et/ou le deuxième récipient de stockage (2, 4) à l'au moins un consommateur (5) actionné par air comprimé en fonction d'un besoin en air comprimé pronostiqué et/ou actuel de l'au moins un consommateur (5) actionné par air comprimé.

10. Arrangement d'air comprimé (10) selon l'une des revendications précédentes, **caractérisé en ce que** l'arrangement d'air comprimé (10) comporte au moins deux consommateurs (5) actionnés par air comprimé et un troisième récipient de stockage destiné au stockage (9) d'air comprimé, l'arrangement d'air comprimé étant configuré pour acheminer au moins une partie de l'air évacué par l'un des consommateurs actionnés par air comprimé tout d'abord au troisième récipient de stockage (9) et de là à un consommateur (5) actionné par air comprimé supplémentaire.

11. Véhicule automobile (20), de préférence autobus, comprenant un arrangement d'air comprimé (10) selon l'une des revendications précédentes.

12. Procédé pour faire fonctionner un arrangement d'air comprimé (10) pour une suspension pneumatique d'un véhicule automobile (20), de préférence pour une suspension pneumatique d'un autobus, comprenant
- un dispositif de génération d'air comprimé (1), de préférence un compresseur à piston,
- un premier récipient de stockage (2) destiné au stockage d'air comprimé,
- au moins un soufflet de suspension pneumatique (3), de préférence destiné au changement de niveau du véhicule automobile (20),
- un deuxième récipient de stockage (4) destiné au stockage d'air comprimé, et
- au moins un consommateur (5) actionné par air comprimé,
comprenant les étapes suivantes :
- remplissage de l'au moins un soufflet de suspension pneumatique (3) avec de l'air comprimé issu du premier récipient de stockage (2) et/ou du dispositif de génération d'air comprimé (1)
- vidage de l'au moins un soufflet de suspension pneumatique (3) par évacuation d'au moins une partie de l'air comprimé hors de l'au moins un soufflet de suspension pneumatique (3) dans le deuxième récipient de stockage (4) ; et
- alimentation de l'au moins un consommateur (5) actionné par air comprimé avec de l'air comprimé issu du deuxième récipient de stockage (4).
